# EUROPEAN PATENT SPECIFICATION

(11) **EP 3 813 280 B1**
(45) Date of publication and mention of the grant of the patent: **31.07.2024**
(21) Application number: 19821780.4
(22) Date of filing: 19.06.2019
(51) Int. Cl.: H04L 1/00

(54) **FORWARD ERROR CORRECTION HANDOVER METHOD, APPARATUS, AND COMPUTER STORAGE MEDIUM**
HANDOVER-VERFAHREN MIT VORWÄRTSFEHLERKORREKTUR, EINRICHTUNG UND COMPUTERSPEICHERMEDIUM
PROCÉDÉ ET APPAREIL DE TRANSFERT DE CORRECTION D'ERREURS SANS VOIE DE RETOUR, ET SUPPORT D'INFORMATIONS POUR ORDINATEUR

(30) Priority: 19.06.2018 CN 201810632361
(43) Date of publication of application: 28.04.2021
(73) Proprietor: ZTE Corporation, Shenzhen, Guangdong 518057 (CN)
(72) Inventor: QIN, Chuan, Guangdong 518057 (CN)
(74) Representative: Novagraaf Technologies
(86) International application number: PCT/CN2019/091836
(87) International publication number: WO 2019/242629

(56) References cited:
- EP-A1- 2 775 648
- EP-A1- 3 496 308
- WO-A1-2018/035857
- CN-A- 101 047 470
- CN-A- 101 989 888
- CN-A- 102 007 712
- US-A1- 2008 040 643
- US-A1- 2013 114 962
- US-A1- 2014 181 616

## Description

### Field of the Invention

The present disclosure relates to the field of communications, and in particular to a forward error correction switching method, a forward error correction switching apparatus, and a computer storage medium.

### Background of the Invention

The rapid development of communication networks brings with it requirements for long-distance and large-bandwidth transmission, but the realization of long-distance transmission faces many problems in the fields of optics and electronics. For example, the higher a signal rate is, the more an optical signal is affected during transmission by noise, chromatic dispersion, non-linear effects, and electromagnetic interference, which results in bit errors when a receiving side recovers data. Further, in order to reduce costs, improve the rate of utilizing system equipment and extend the service life of an optical communication system, optical fiber lines with degraded performance are continued to be used to transmit signals, which inevitably affects the stability of received signals. In order to solve the foregoing problems, the IEEE802.3 standard has set forth that when it comes to an Ethernet interface such as 25G, 40G, 50G, 100G and 200G, the Ethernet interface can be provided with forward error correction (FEC) technology to solve the problem of data loss caused by bit errors over a communication channel, thereby improving the adaptability of the Ethernet interface to the physical channel. In addition, it is set forth that a device provided at two ends of the device with a same FEC mode can establish a successful connection, and that an Ethernet interface with its own FEC function being enabled and an Ethernet interface without an FEC function being enabled would fail to be successfully connected. Although a standard FEC algorithm adds redundant error correction codes which occupy a certain effective bandwidth, it can help to obtain a net coding gain of at least 5 dB.

The IEEE802.3 standard clarifies the method of implementing an FEC function on an Ethernet interface, but some devices still do not support the FEC function. Besides, different manufacturers may provide different default configurations for FEC functions. For example, some manufacturers have the FEC function enabled by default, and some manufacturers have the FEC function disabled by default, which leads to a connection failure between an Ethernet interface with the FEC function being enabled and an Ethernet interface without the FEC function being enabled. Therefore, it is usually necessary to manually check FEC configuration before connecting two ends of a device. Furthermore, there are also situations where FEC is manually configured in real time during network operation. However, manual configuration requires a long duration, which may cause packet loss and thus degrade traffic transmission quality.

### Summary of the Invention

To solve the existing technical problems, embodiments of the present disclosure provide a forward error correction switching method according to claim 1, a forward error correction switching apparatus according to independent claim 7, and a computer storage medium according to independent claim 9, that can improve traffic transmission quality.

Further embodiments are provided by the dependent claims.

In the forward error correction switching method, the forward error correction switching apparatus, and the computer storage medium provided by the above-mentioned embodiments, the local end performs code word mark detection on the data code stream transmitted by the peer end by means of the set code word mark, so as to detect whether the peer end has enabled an FEC mode supported by the local end. Then depending on the detection result, automatic switching is performed as to whether to enable forward error correction on the local end, so that when the local end detects that the peer end has enabled the FEC mode supported by the local end, the local end also automatically enables FEC, to ensure a successful connection between the local end and the peer end. This avoids problems such as long operation time and errors caused by the mode of enabling the FEC on the local end after manually determining that the peer end has enabled the FEC mode , thereby reducing packet loss , and improving traffic transmission quality.

### Brief Description of the Drawings

Fig. 1 is a schematic flowchart of a forward error correction switching method according to an embodiment of the present disclosure;
Fig. 2 is a schematic structural diagram of an FEC layer;
Fig. 3 is a specific schematic flowchart of a forward error correction switching method according to an embodiment of the present disclosure;
Fig. 4 is a schematic structural diagram of a synchronization state machine according to an embodiment of the present disclosure;
Fig. 5 is a schematic structural diagram of a forward error correction switching apparatus according to an embodiment of the present disclosure; and
Fig. 6 is a schematic structural diagram of a forward error correction switching apparatus according to another embodiment of the present disclosure.

### Detailed Description of the Embodiments

Embodiments of the present disclosure will be described further in detail below in conjunction with the accompanying drawings and specific embodiments. Unless otherwise defined, all technical and scientific terms used herein have the same meaning as usually understood by those persons of ordinary skill in the art of the present disclosure. The terms used herein in the description of the present disclosure are only for the purpose of describing specific embodiments, and are not intended to limit the present disclosure. The term "and/or" as used herein shall be interpreted as including any and all combinations of one or more of related listed items.

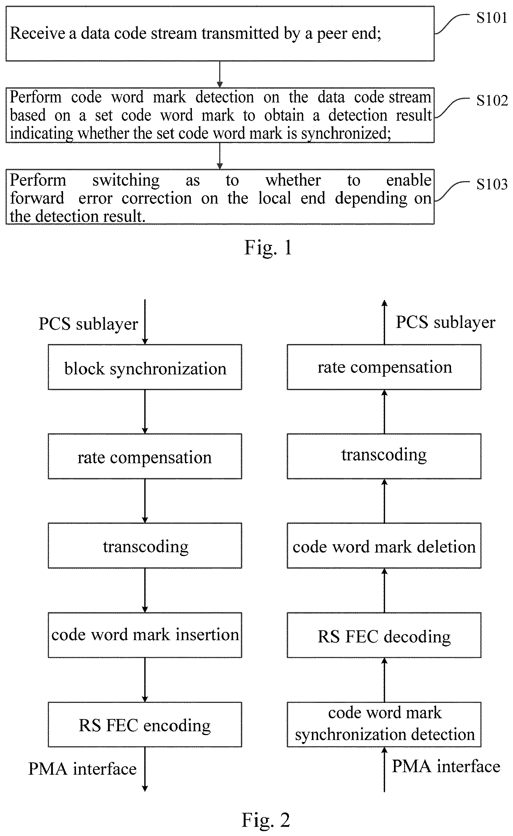

Referring to Fig. 1, which is a schematic flowchart of a forward error correction switching method according to an embodiment of the present disclosure, the method includes steps S101, S 102, and S 103 .

In step S101, a data code stream transmitted by a peer end is received.

It is to be understood that "local end" and "peer end" are called "local" or "peer" according to relative positions or functions of any two Ethernet interfaces. Generally, an Ethernet interface (also called an Ethernet port) includes a physical coding sublayer (PCS) and a physical medium attachment (PMA) sublayer. In this embodiment, an example is given of receiving, by a local end, the data code stream transmitted by the peer end. The local end receiving the data code stream transmitted by the peer end can be understood as a receiving-side entity of the local end receiving the data code stream transmitted by the peer end. Specifically, referring to Fig. 2, if FEC is enabled on the local end, when data is transmitted via Ethernet, a transmitting-side entity of the local end acquires, from a PCS sublayer of the local end, a data code stream formed by Ethernet data packets, performs operations such as block synchronization, rate compensation, transcoding, code word mark insertion, and Reed-Solomon (RS) FEC encoding on the Ethernet data packets, and then transmits the encoded data code stream to the peer end via a PMA interface on the local end; and when data is received via Ethernet, the receiving-side entity of the local end acquires a data code stream from the PMA interface on the local end, performs operations such as code word mark synchronization, RS FEC decoding, and code word mark deletion, transcoding, and rate compensation on the data code stream, and then transmits the obtained data code stream to the PCS sublayer of the local end. If FEC is not enabled on the local end, when data is transmitted via Ethernet, the transmitting-side entity of the local end acquires, from the PCS sublayer of the local end, a data code stream formed by Ethernet data packets, and directly transmits the data code stream to the peer end via the PMA interface on the local end; and when data is received via Ethernet, the receiving-side entity of the local end acquires a data code stream from the PMA interface on the local end, and directly transmits the data code stream to the PCS sublayer of the local end.

In step S102, code word mark detection is performed on the data code stream based on a set code word mark, and a detection result indicating whether the set code word mark is synchronized is obtained.

It is to be understood that the set code word mark may be preset in accordance with an FEC mode adopted for the local end. If FEC is not enabled on the peer end, then the data code stream does not include the set code word mark; if FEC is enabled on the peer end and an FEC mode adopted for the peer end is different from an FEC mode adopted for the local end, then the data code stream does not include the set code word mark, either; and if FEC is enabled on the peer end and an FEC mode adopted for the peer end is the same as the FEC mode adopted for the local end, then the data code stream includes the set code word mark. Therefore, by performing code word mark detection on the data code stream based on the set code word mark, it can be learned whether the set code word mark is synchronized, i.e., whether the FEC on the peer end and the FEC on the local end are synchronized or not. The reason why the FEC on the peer end and the FEC on the local end are not synchronized may be that the FEC on the peer end is not enabled, or the FEC on the peer end is enabled but the FEC mode for the peer end is different from the FEC mode for the local end.

According to the invention as claimed, in step S102, the performing code word mark detection on the data code stream based on a set code word mark, to obtain a detection result indicating whether the set code word mark is synchronized, includes: determining a currently-to-be-matched code block from the data code stream; detecting whether the currently-to-be-matched code block matches the set code word mark; and determining, when the currently-to-be-matched code block matches the set code word mark, a next-to-be-matched code block from the data code stream based on a transmission speed of the data code stream and a transmission frequency of a code word mark of the data code stream, and determining, when it is detected that the next-to-be-matched code block matches the set code word mark, that the set code word mark is synchronized.

It should be noted that the set code word mark is identification information corresponding to the FEC supported by the local end, and the set code word mark may have a size that can be set and adjusted according to actual conditions, for example, a size that can be set to 8 bits. The to-be-matched code block has a same size as the set code word mark. Correspondingly, the to-be-matched code block matching the set code word mark match may occur in the case that the to-be-matched code block is the same as the set code word mark. Since there may be data in the data code stream that is the same as the set code word mark, when the currently-to-be-matched code block matches the set code word mark, it cannot be determined yet that the set code word mark is synchronized. However, if FEC is enabled on the peer end, the code word mark will be inserted periodically by the peer end into the data code stream. Therefore, if the next-to-be-matched code block is determined from the data code stream based on the transmission speed of the data code stream and the transmission frequency of the code word mark of the data code stream, and it is detected that the next-to-be-matched code block matches the set code word mark, it can now be determined that FEC is enabled on the peer end and the FEC mode enabled on the peer end is the same as the FEC mode supported by the local end. It is to be understood that, the transmission frequency of the code word mark of the data code stream may be a transmission frequency of a code word mark corresponding to the FEC mode supported by the local end. When the FEC mode supported by the peer end is the same as the FEC mode supported by the local end, transmission frequencies of the code word marks corresponding to respective ones of the modes should be the same.

Thus, by matching a to-be-matched code block selected for a first time and a to-be-matched code block selected for a second time from the received data code stream with the set code word mark, and determining that the set code word mark is synchronized only when both the to-be-matched code blocks match the set code word mark, accuracy of the detection is improved.

In an alternative embodiment, the determining a currently-to-be-matched code block from the data code stream, and detecting whether the currently-to-be-matched code block matches the set code word mark, includes: selecting, from a current data packet of the data code stream, consecutive bits of a set threshold size as the currently-to-be-matched code block by taking a current bit as a starting point; detecting whether the currently-to-be-matched code block matches the set code word mark; and selecting, when it is detected that the currently-to-be-matched code block does not match the set code word mark, consecutive bits of the set threshold size as an updated currently-to-be-matched code block by taking a next bit following the current bit as a starting point, and returning to the step of detecting whether the currently-to-be-matched code block matches the set code word mark.

It is to be understood that the set threshold size may be the same as the size of the set code word mark. Correspondingly, the detecting whether the currently-to-be-matched code block matches the set code word mark may be detecting whether the to-be-matched code block is the same as the set code word mark. The current data packet may be a first data packet of the data code stream received by the local end, or other data packets of the data code stream received by the local end. The local end needs to determine whether FEC is enabled on the peer end, and determine a location of the code word mark inserted by the peer end into the data code stream when the FEC is enabled on the peer end; therefore, by way of selecting consecutive bits of a set threshold size as the currently-to-be-matched code block by taking a current bit as a starting point and then matching the currently-to-be-matched code block with the set code word mark, continuing to select, when the currently-to-be-matched code block does not match the set code word mark, a to-be-matched code block by taking a next bit following the current bit as a starting point and then performing the matching, and continuing to select in the same manner until matching detection between the current data package and the set code word mark is completed, fast matching can be realized.

In an alternative embodiment, the determining a next-to-be-matched code block from the data code stream based on a transmission speed of the data code stream and a transmission frequency of a code word mark of the data code stream, includes: determining a target data packet from the data code stream based on a transmission speed of the data code stream and a transmission frequency of a code word mark of the data code stream; and selecting, based on a positional relationship between the currently-to-be-matched code block and the current data packet, and from the target data packet, consecutive bits having a same positional relationship as a next-to-be-matched code block.

Here, the local end can learn a data size received per unit time based on the transmission speed of the data code stream, and can learn an interval of transmitting two adjacent code word marks based on the transmission frequency of the code word mark of the data code stream. Therefore, based on the transmission speed of the data code stream and the transmission frequency of the code word mark of the data code stream, the local end can learn a relative positional relationship between two adjacent code word marks in the data code stream, i.e., can learn a target packet where a next code word mark is located. Further, depending on a location of a starting code word of the currently-to-be-matched code block in the current data packet, the next-to-be-matched code block can be determined. For example, assuming that the transmission speed of the data code stream is 16 bytes per millisecond, the transmission frequency of the code word mark is 200 Hz, i.e., a transmission cycle of the code word mark is 5 milliseconds, and each data packet has a size of 16 bytes, if the current data packet is a first data packet in the data code stream, the current bit is a first bit of the first data packet, the set threshold size is 8 bits, and a currently-to-be-matched code block having a size of 8 bits is selected by taking the first bit as a starting point to match with the code word mark, then consecutive bits having a size of 8 bits will be selected as a next-to-be-matched code block by taking a first bit of a sixth data package of the data code stream as a starting point. In this way, based on the transmission speed of the data code stream and the transmission frequency of the code word mark of the data code stream, it is possible to quickly determine the to-be-matched code block, and to detect whether the set code word mark is synchronized.

In an alternative embodiment, the method may further include: determining that the set code word mark is not synchronized when the next-to-be-matched code block does not match the set code word mark; selecting, from the target data packet, consecutive bits of the set threshold size as the updated currently-to-be-matched code block by taking a next bit following a last bit of the next-to-be-matched code block as a starting point; and returning to the step of detecting whether the currently-to-be-matched code block matches the set code word mark.

Here, when the currently-to-be-matched code block matches the set code word mark, and the next-to-be-matched code block does not match the set code word mark, it may indicate that there is same data in the current data packet of the data code stream that is the same as the set code word mark, and in this case it is determined that the set code word mark is not synchronized. The reason why the set code word mark is not synchronized may be that FEC is not enabled currently on the peer end. Because FEC on the peer end may be enabled in real time during traffic transmission, it is necessary to continue to select consecutive bits of the set threshold size as an updated currently-to-be-matched code block by taking a next bit following a last bit of the next-to-be-matched code block in the target data packet as a starting point, and to continue to detect whether the currently-to-be-matched code block matches the set code word mark. In this way, real-time code word mark detection is performed on the data code stream by means of the set code word mark, so that timely switching can be ensured as to whether to enable forward error correction on the local end.

In step S103, switching is performed as to whether to enable forward error correction on the local end depending on the detection result.

Specifically, when the local end determines that the set code word mark is synchronized, the local end is controlled to enable forward error correction to ensure that both the local end and the peer end enable FEC in a same mode, so as to achieve a successful connection therebetween; and when the local end determines that the set code word mark is not synchronized, the local end is controlled not to enable forward error correction.

Here, the controlling the local end to enable forward error correction includes controlling the transmitting-side entity of the local end to enable forward error correction and controlling the receiving-side entity of the local end to enable forward error correction, and the controlling the local end to not to enable the forward error correction includes controlling both the transmitting-side entity and the receiving-side entity of the local end not to enable the forward error correction.

In summary, in the forward error correction switching method provided in this embodiment, the local end performs code word mark detection on the data code stream transmitted by the peer end by means of the set code word mark, so as to detect whether the peer end has enabled an FEC mode supported by the local end and perform automatic switching as to whether to enable forward error correction on the local end depending on the detection result, so that when the local end detects that the peer end has enabled an FEC mode supported by the local end, the local end also automatically enables FEC to ensure a successful connection between the local end and the peer end. This avoids problems such as long operation time and errors caused by the mode of enabling the FEC on the local end after manually determining that the peer end has enabled the FEC mode , thereby reducing packet loss , and improving traffic transmission quality .

In an alternative embodiment, after determining that the set code word mark is synchronized, the method may further include: deleting the set code word mark from the decoded data code stream based on a positional relationship between the set code word mark and the data code stream.

It is to be understood that, if it is determined that the set code word mark is synchronized, it may indicate that the peer end has enabled a same FEC mode as the local end. After enabling FEC, the peer end performs operations such as encoding the data code stream and inserting the set code word mark into the data code stream; therefore, after receiving the data code stream transmitted by the peer end, the local end needs to delete the set code word mark from the decoded data code stream based on a positional relationship between the set code word mark and the data code stream. When the currently-to-be-matched code block matches the set code word mark and the next-to-be-matched code block also matches the set code word mark, the deleting the set code word mark from the decoded data code stream based on the positional relationship between the set code word mark and the data code stream includes: deleting the currently-to-be-matched code block from the decoded current data packet based on the positional relationship between the currently-to-be-matched code block and the current data packet, and deleting the next-to-be-matched code block from the decoded target data packet based on a positional relationship between the next-to-be-matched code block and the target data packet. In this way, by timely deleting the code word mark so that only valid information required by the local end is retained in the data code stream, resource overhead on the local end can be saved.

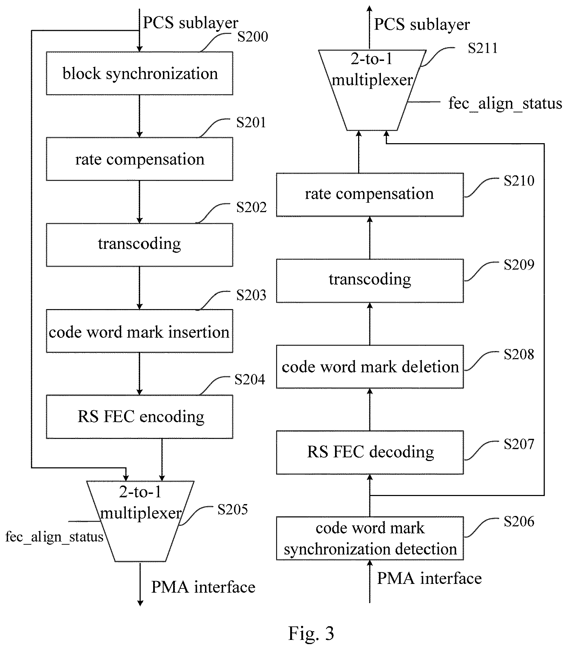

The embodiments of the present disclosure will be described in further detail below through specific examples with reference to Fig. 2 and Fig. 3. Examples in which each of the local end and the peer end includes an Ethernet receiving side and an Ethernet transmitting side will be taken for the description. On the one hand, if it is desired to realize automatic switching of an FEC function on the Ethernet receiving side of the local end, then data needs to be processed on the Ethernet transmitting side of the peer end in accordance with IEEE802.3 standard, i.e., data on the PCS sublayer needs to undergo steps such as block synchronization, rate compensation, transcoding, code word mark insertion and RS FEC encoding first and then be taken as data to be transmitted. On the other hand, the data is processed as follows on the Ethernet receiving side of the local end: performs bit-shifting on the data received from the PCS sublayer, i.e., shifting the received data by bits until data matching the code word mark (CWM) is identified; determining whether the code word mark is synchronized based on the CWM, and automatically switching the FEC function on the local end depending on whether the CWM is synchronized; and finally determining an FEC frame boundary.

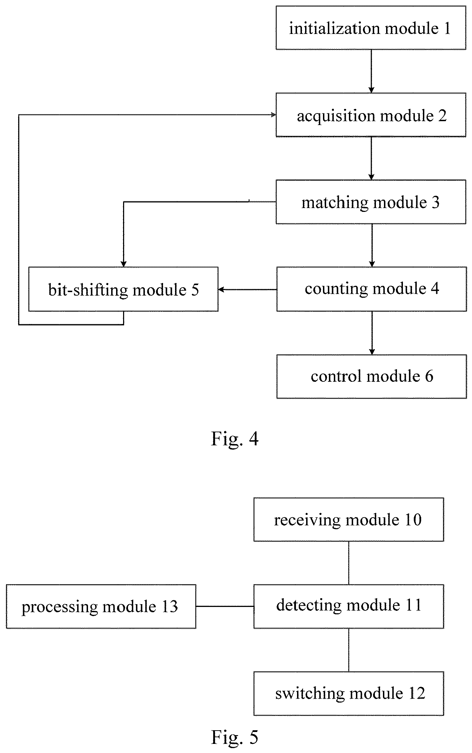

Fig. 3 is a schematic flowchart of a forward error correction switching method provided by a specific embodiment. When the FEC function is enabled on the local end, the Ethernet transmitting side acquires, from the PCS sublayer of the local end, a data code stream formed by Ethernet data packets, sequentially performs steps S200 to S205 (namely operations such as block synchronization, rate compensation, transcoding, code word mark insertion, and RS FEC encoding) on the Ethernet data packets, inputs the data code stream through line A of a 2-to-1 multiplexer, and then transmits the data code stream to the peer end through the PMA interface on the local end. When the FEC function is not enabled on the local end, a data code stream acquired by the Ethernet transmitting side from the PCS sublayer of the local end is input through line B of the 2-to-1 multiplexer and directly transmitted to the peer end through the PMA interface on the local end. Here, whether the data code stream is input from line A or line B of the 2-to-1 multiplexer may be determined by a signal about a fec_align_status output by a synchronization state machine. If it is a signal indicating that the fec_align_status is valid, namely fec_align_status<=true, then line A is selected; and if it is a signal indicating that the fec_align_status is invalid, namely fec_align_status<=false, then line B is selected. The Ethernet receiving side performs step S206 (namely code word mark synchronization detection) on the data code stream received from the PMA sublayer. If it is determined that the code word mark is synchronized, i.e., a same FEC mode is enabled on the peer end, steps S207 to S211 are performed in sequence; otherwise, only step S211 is performed. The code word mark synchronization detection is implemented by the synchronization state machine shown in Fig. 4. The synchronization state machine includes 6 modules, which are: an initialization module 1, an acquisition module 2, a matching module 3, a counting module 4, a bit-shifting module 5, and a control module 6.

The initialization module 1 is configured to trigger a jump to an initial state when receiving a module-reset signal (reset), a poor-link-signal-quality signal (!Signal_ok) or a restarting-synchronization-function signal (restart_lock).

The acquisition module 2 is configured to acquire a to-be-matched CWM BLOCK. The code word is formed of certain specific fixed bytes and is finally encapsulated in the CWM BLOCK. The acquisition module 2 is specifically configured to acquire the to-be-matched CWM BLOCK from the bit-shifting module 5.

The matching module 3 is configured to determine, based on the CWM BLOCK provided by the acquisition module 2, whether the CWM BLOCK matches the set CWM, and generate and transmit, if it is determined that the CWM BLOCK matches the set CWM, a signal indicating that the matching is successful (CWM_Valid) to the counting module 4, or otherwise generate and transmit a bit-shifting signal carrying information indicating that the matching fails (!CWM_Valid) to the bit-shifting module 5 to instruct the bit-shifting module 5 to continue to search the to-be-matched CWM BLOCK by bit-shifting.

The counting module 4 is configured to count whether the CWM BLOCK is detected to match the set code word mark for successive two times. If the CWM BLOCK is detected to match the set code word mark for successive two times, the counting module 4 transmits a message indicating that the matching has been successful for two consecutive times to the control module 6. If the CWM BLOCK is not detected to match the set code word mark for successive two times, the counting module 4 transmits a bit-shifting signal carrying information indicating that the matching fails to the bit-shifting module 5 to instruct the bit-shifting module 5 to continue to search the to-be-matched CWM BLOCK by bit-shifting.

The bit-shifting module 5 is configured to perform bit-shifting based on the received bit-shifting signal, to acquire the to-be-matched CWM BLOCK. Here, the bit-shifting module 5 shifts the received data code stream by bits until data matching the CWM is identified. For example, consecutive bits of a set threshold size is selected from the data code stream as the to-be-matched CWM BLOCK by taking a current bit as a starting point, and consecutive bits of the set threshold size is selected as a next-to-be-matched CWM BLOCK by taking a next bit following the current bit as a starting point when the matching fails. In addition, because the CWM is transmitted periodically by a device on the peer end, after it is detected for a first time that the matching is completed, a location of a next CWM can be determined by counting, and a corresponding to-be-matched CWM BLOCK can be acquired.

The control module 6 is configured to, when receiving the message indicating that the matching has been successful for two consecutive times, determine that the FEC is synchronized, and output a signal indicating that the fec_align_status is valid, namely, fec_align_status<=true. The signal being true also indicates that the device on the peer end has enabled the FEC function.

Here, if the local end detects that the FEC is synchronized, it may indicate that a standard code word mark is inserted in data transmitted by the peer end. In this case, the synchronization state machine of the local end will generate a signal indicating that the fec_align_status is valid, namely fec_align_status<=true, which signal controls 2-to-1 multiplexers on the receiving side and the transmitting side of the local end, and line A is selected. If the local end does not detect that the FEC is synchronized, it may indicate that the standard code word mark may not be inserted into the data transmitted by the peer end, which means that the FEC function is not enabled on the peer end. In this case, the synchronization state machine of the local end will generate a signal indicating that fec_align_status is invalid, namely, fec_align_status<=false, which signal controls the 2-to-1 multiplexers on the receiving side and the transmitting side of the local end, and line B is selected.

It should be noted that the forward error correction switching method provided by the embodiments of the present disclosure is applicable to, but is not limited to, 25G, 40G, 50G, 100G, and 200G Ethernet interfaces. The detection on the receiving side involves not only the case of 25G single lane, but also the case of for example 100G multiple lanes. In the case of multiple lanes, synchronization detection can be performed on each of the lanes separately by the method in which the synchronization state machine of Fig. 4 performs code word mark synchronization detection, and only when synchronization is realized on each of the lanes, can it be determined that the FEC is synchronized.

To sum up, the forward error correction switching method provided by the embodiments of the present disclosure can effectively realize automatic identification and switching of forward error correction on a physical layer of an Ethernet interface. In other words, by detecting a corresponding code word mark on the receiving side, switching of the FEC function on the local end can be quickly and automatically performed, which avoids delay caused by manual intervention and effectively solves the problem of affecting traffic transmission quality caused by real-time configuration of FEC in a network.

An embodiment of the present disclosure also provides a forward error correction switching apparatus, which is applied to a local end. As shown in Fig. 5, the switching apparatus includes: a receiving module 10, configured to receive a data code stream transmitted by a peer end; a detecting module11, configured to perform code word mark detection on the data code stream based on a set code word mark, to obtain a detection result indicating whether the set code word mark is synchronized; and a switching module 12, configured to perform switching as to whether to enable forward error correction on the local end depending on the detection result.

As a conclusion, in the forward error correction switching apparatus provided in this embodiment, the detecting module 11 performs code word mark detection on the data code stream transmitted by the peer end by means of the set code word mark, thereby detecting whether an FEC mode supported by the local end has been enabled on the peer end; the switching module 12 performs automatic switching as to whether to enable FEC on the local end depending on the detection result, so that when the local end detects that an FEC mode supported by the local end has been enabled on the peer end, the local end also automatically enables FEC. This avoids problems such as long operation time and errors caused by the mode of enabling the FEC on the local end after manually determining that the peer end has enabled the FEC mode , thereby reducing packet loss , and improving traffic transmission quality.

According to the invention as claimed, the detecting module 11 is specifically configured to: determine a currently-to-be-matched code block from the data code stream, and detect whether the currently-to-be-matched code block matches the set code word mark; and determine, when the currently-to-be-matched code block matches the set code word mark, a next-to-be-matched code block from the data code stream based on a transmission speed of the data code stream and a transmission frequency of a code word mark of the data code stream, and determine that the set code word mark is synchronized when it is detected that the next-to-be-matched code block matches the set code word mark.

Thus, by matching a to-be-matched code block selected for a first time and a to-be-matched code block selected for a second time from the received data code stream with the set code word mark, and determining that the set code word mark is synchronized only when both the to-be-matched code blocks match the set code word mark, accuracy of the detection is improved.

In an alternative embodiment, the detecting module 11 is specifically configured to: select, from a current data packet of the data code stream, consecutive bits of a set threshold size as a currently-to-be-matched code block by taking a current bit as a starting point; detect whether the currently-to-be-matched code block matches the set code word mark; and select, when it is determined that the currently-to-be-matched code block does not match the set code word mark, consecutive bits of the set threshold size as an updated currently-to-be-matched code block by taking a next bit following the current bit as a starting point, and returning to the step of detecting whether the currently-to-be-matched code block matches the set code word mark.

In this way, by selecting consecutive bits of a set threshold size as a currently-to-be-matched code block by taking a current bit as a starting point and then matching the currently-to-be-matched code block with the set code word mark, continuing to select, when the currently-to-be-matched code block does not match the set code word mark, a to-be-matched code block by taking a next bit following the current bit as a starting point and then performing the matching, and continuing to select in the same manner until the detection of the matching between the current data package and the set code word mark is completed, fast matching can be realized.

In an alternative embodiment, the detection module 11 is specifically configured to: determine a target data packet from the data code stream based on a transmission speed of the data code stream and a transmission frequency of a code word mark of the data code stream; and select, based on a positional relationship between the currently-to-be-matched code block and the current data packet, consecutive bits having a same positional relationship from the target data packet as the next-to-be-matched code block.

In this way, based on the transmission speed of the data code stream and the transmission frequency of the code word mark of the data code stream, it is possible to quickly determine the to-be-matched code block, and to detect whether the set code word mark is synchronized.

In an alternative embodiment, the detecting module 11 is specifically configured to: determine, when the next-to-be-matched code block does not match the set code word mark, that the set code word mark is not synchronized, and select, from the target data packet, consecutive bits of the set threshold size as the updated currently-to-be-matched code block by taking a next bit following a last bit of the next-to-be-matched code block as a starting point, and return to the step of detecting whether the currently-to-be-matched code block matches the set code word mark.

Thus, real-time code word mark detection is performed on the data code stream by means of the set code word mark, so that timely switching can be ensured as to whether to enable forward error correction on the local end.

In an alternative embodiment, the switching module 12 is specifically configured to: control the local end to enable forward error correction when it is determined that the set code word mark is synchronized, and control the local end not to enable forward error correction when it is determined that the set code word mark is not synchronized.

In an alternative embodiment, the apparatus further includes: a processing module 13, configured to delete the set code word mark from the decoded data code stream based on a positional relationship between the set code word mark and the data code stream.

In this way, by timely deleting the code word mark so that only valid information required by the local end is retained in the data code stream, resource overhead on the local end can be saved.

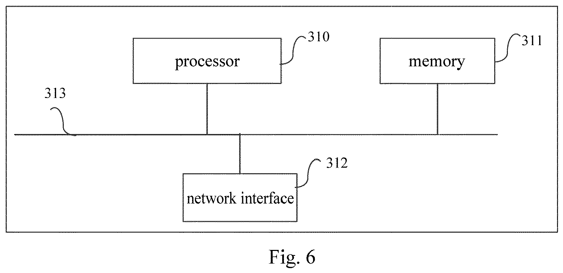

An embodiment of the present disclosure further provides a forward error correction switching apparatus. As shown in Fig. 6, the apparatus includes: at least one processor 310 and a memory 311 for storing a computer program executable on the processor 310. The processor 310 shown in Fig. 6 is not intended to indicate that provided is one processor 310, but only indicates a position of the processor 310 relative to other devices. In practical applications, provided may be one or more processors 310. Similarly, the memory 311 shown in Fig. 6 has same indications, i.e., it is only intended to indicate a position of the memory 311 relative to other devices. In practical applications, provided may be one or more memories 311.

When the processor 310 is configured to execute the computer program, it implements the following steps: receive a data code stream transmitted by a peer end; perform code word mark detection on the data code stream based on a set code word mark to obtain a detection result indicating whether the set code word mark is synchronized; and perform switching as to whether to enable forward error correction on the local end depending on the detection result.

According to the invention as claimed, the processor 310 is further configured to implement the following steps when executing the computer program: determine a currently-to-be-matched code block from the data code stream, and detect whether the currently-to-be-matched code block matches the set code word mark; and determine, when the currently-to-be-matched code block matches the set code word mark, a next-to-be-matched code block from the data code stream based on a transmission speed of the data code stream and a transmission frequency of a code word mark of the data code stream, and determine that the set code word mark is synchronized when it is detected that the next-to-be-matched code block matches the set code word mark.

In an alternative embodiment, the processor 310 is further configured to implement the following steps when executing the computer program: select, from a current data packet of the data code stream, consecutive bits of a set threshold size as the currently-to-be-matched code block by taking a current bit as a starting point; detect whether the currently-to-be-matched code block matches the set code word mark; and select, when it is determined that the currently-to-be-matched code block does not match the set code word mark, consecutive bits of the set threshold size as an updated currently-to-be-matched code block by taking a next bit following the current bit as a starting point, and return to the step of detecting whether the currently-to-be-matched code block matches the set code word mark.

In an alternative embodiment, the processor 310 is further configured to implement the following steps when executing the computer program: determine a target data packet from the data code stream based on the transmission speed of the data code stream and the transmission frequency of the code word mark of the data code stream; and select, based on a positional relationship between the currently-to-be-matched code block and the current data packet, consecutive bits having a same positional relationship from the target data packet as the next-to-be-matched code block.

In an alternative embodiment, the processor 310 is further configured to implement the following steps when executing the computer program: determine, when the next-to-be-matched code block does not match the set code word mark, that the set code word mark is not synchronized, and select, from the target data packet, consecutive bits of the set threshold size as the updated currently-to-be-matched code block by taking a next bit following a last bit of the next-to-be-matched code block as a starting point, and return to the step of detecting whether the currently-to-be-matched code block matches the set code word mark.

In an alternative embodiment, the processor 310 is further configured to implement the following steps when executing the computer program: control the local end to enable forward error correction when it is determined that the set code word mark is synchronized, and control the local end not to enable forward error correction when it is determined that the set code word mark is not synchronized.

In an alternative embodiment, the processor 310 is further configured to implement the following steps when executing the computer program: delete the set code word mark from the decoded data code stream based on a positional relationship between the set code word mark and the data code stream.

The apparatus also includes: at least one network interface 312. Various components of the apparatus are coupled together through a bus system 313. It is to be understood that the bus system 313 is configured to realize connection and communication between these components. The bus system 313 includes a power bus, a control bus, and a status signal bus, in addition to a data bus. However, for clear description, in Fig. 6, various buses are shown as the bus system 313.

The memory 311 may be a volatile memory or a non-volatile memory, and may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disk, or a compact disc read-only memory (CD-ROM), among which the magnetic surface memory may be a disk storage or a tape storage. The volatile memory may be a random access memory (RAM), which is used as an external cache. As an exemplary but not restrictive illustration, many forms of RAMs are available, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synclink dynamic random access memory (SLDRAM), a direct rambus random access memory (DRRAM) ). The memory 311 described in the embodiments of the present disclosure is intended to include, but is not limited to, these and any other suitable types of memories.

The memory 311 in the present embodiment is configured to store various types of data to support operations of the apparatus. Examples of such data include: any computer program for operating on the apparatus, such as an operating system and an application; contact data; phone book data; a message; a picture; a video, etc. Among them, the operating system includes various system programs, such as a framework layer, a core library layer, and a driver layer, which are used to implement various basic services and process hardware-based tasks. The application may include various applications, such as a media player, a browser, etc., which are used to implement various application services. Here, the program used to implement the method of the embodiments of the present disclosure may be included in an application.

The present embodiment also provides a computer storage medium, which for example, includes the memory 311 storing a computer program thereon. The computer program can be executed by the processor 310 of the above apparatus to implement the steps of the foregoing method. The computer storage medium may be a FRAM, a ROM, a PROM, an EPROM, an EEPROM, a flash memory, a magnetic surface memory, an optical disk, or a CD-ROM, etc., or may be various devices including one or any combination of the above memories, such as a mobile phone, a computer, a tablet device, a personal digital assistant, etc.

Specifically, the present embodiment provides a computer storage medium which stores a computer program. The computer program, when executed by a processor, implements the following steps of: receiving a data code stream transmitted by a peer end; performing code word mark detection on the data code stream based on a set code word mark to obtain a detection result indicating whether the set code word mark is synchronized; and performing switching as to whether to enable forward error correction on the local end depending on the detection result.

According to the invention as claimed, the computer program, when executed by a processor, further implements the following steps of: determining a currently-to-be-matched code block from the data code stream, and detecting whether the currently-to-be-matched code block matches the set code word mark; and determining, when the currently-to-be-matched code block matches the set code word mark, a next-to-be-matched code block from the data code stream based on a transmission speed of the data code stream and a transmission frequency of a code word mark of the data code stream, and determining that the set code word mark is synchronized when it is detected that the next-to-be-matched code block matches the set code word mark.

In an alternative embodiment, the computer program, when executed by a processor, further implements the following steps of: selecting, from a current data packet of the data code stream, consecutive bits of a set threshold size as the currently-to-be-matched code block by taking a current bit as a starting point; detecting whether the currently-to-be-matched code block matches the set code word mark; and selecting, when it is determined that the currently-to-be-matched code block does not match the set code word mark, consecutive bits of the set threshold size as an updated currently-to-be-matched code block by taking a next bit following the current bit as a starting point, and returning to the step of detecting whether the currently-to-be-matched code block matches the set code word mark.

In an alternative embodiment, the computer program, when executed by a processor, further implements the following steps of: determining a target data packet from the data code stream based on the transmission speed of the data code stream and the transmission frequency of the code word mark of the data code stream; and selecting, based on a positional relationship between the currently-to-be-matched code block and the current data packet, consecutive bits having a same positional relationship from the target data packet as the next-to-be-matched code block.

In an alternative embodiment, the computer program, when executed by a processor, further implements the following steps of: determining, when the next-to-be-matched code block does not match the set code word mark, that the set code word mark is not synchronized, and selecting, from the target data packet, consecutive bits of the set threshold size as the updated currently-to-be-matched code block by taking a next bit following a last bit of the next-to-be-matched code block as a starting point, and returning to the step of detecting whether the currently-to-be-matched code block matches the set code word mark.

In an alternative embodiment, the computer program, when executed by a processor, further implements the following steps of: controlling the local end to enable forward error correction when it is determined that the set code word mark is synchronized, and controlling the local end not to enable forward error correction when it is determined that the set code word mark is not synchronized.

In an alternative embodiment, the computer program, when executed by a processor, further implements the following steps of: deleting the set code word mark from the decoded data code stream based on a positional relationship between the set code word mark and the data code stream.

The above described is only specific embodiments of the present disclosure, and the protection scope of the present disclosure is not limited to this. Any changes or substitutions that can be easily thought of by any person of ordinary skill in the art within the technical scope disclosed by the present disclosure should fall within the protection scope of the present disclosure. The protection scope of the present disclosure should be subject to the protection scope of the claims.

## Claims

1. A forward error correction switching method, applied to a local end, wherein the method comprises:
receiving a data code stream transmitted by a peer end;
performing code word mark detection on the data code stream based on a periodically set code word mark to obtain a detection result indicating whether the periodically set code word mark is synchronized, wherein the periodically set code word mark being synchronized indicates a peer end of the local end has enabled a same FEC mode as the local end, comprising:
determining a currently-to-be-matched code block from the data code stream, and detecting whether the currently-to-be-matched code block matches the periodically set code word mark; and
determining, when the currently-to-be-matched code block matches the periodically set code word mark, a next-to-be-matched code block from the data code stream based on a transmission speed of the data code stream and a transmission frequency of a code word mark of the data code stream, and determining that the periodically set code word mark is synchronized when it is detected that the next-to-be-matched code block matches the periodically set code word mark; and
performing switching as to whether to enable forward error correction on the local end depending on the detection result.

2. The method according to claim 1, wherein the determining a currently-to-be-matched code block from the data code stream, and detecting whether the currently-to-be-matched code block matches the periodically set code word mark, comprises:
selecting, from a current data packet of the data code stream, consecutive bits of a set threshold size as the currently-to-be-matched code block by taking a current bit as a starting point;
detecting whether the currently-to-be-matched code block matches the periodically set code word mark; and
selecting, when it is determined that the currently-to-be-matched code block does not match the periodically set code word mark, consecutive bits of the set threshold size as an updated currently-to-be-matched code block by taking a next bit following the current bit as a starting point, and returning to the detecting whether the currently-to-be-matched code block matches the periodically set code word mark.

3. The method according to claim 2, wherein the determining a next-to-be-matched code block from the data code stream based on a transmission speed of the data code stream and a transmission frequency of a code word mark of the data code stream, comprises:
determining a target data packet from the data code stream based on the transmission speed of the data code stream and the transmission frequency of the code word mark of the data code stream; and
selecting, based on a positional relationship between the currently-to-be-matched code block and the current data packet, consecutive bits having a same positional relationship from the target data packet as the next-to-be-matched code block.

4. The method according to claim 2, further comprising:
determining, when the next-to-be-matched code block does not match the periodically set code word mark, that the periodically set code word mark is not synchronized, and selecting, from the target data packet, consecutive bits of the set threshold size as the updated currently-to-be-matched code block by taking a next bit following a last bit of the next-to-be-matched code block as a starting point, and returning to the detecting whether the currently-to-be-matched code block matches the periodically set code word mark.

5. The method according to claim 1, wherein after the determining that the periodically set code word mark is synchronized, the method further comprises:
deleting the periodically set code word mark from the data code stream having been decoded based on a positional relationship between the periodically set code word mark and the data code stream.

6. The method according to claim 1, wherein the performing switching as to whether to enable forward error correction on the local end depending on the detection result, comprises:
controlling the local end to enable forward error correction when it is determined that the periodically set code word mark is synchronized, and
controlling the local end not to enable forward error correction when it is determined that the periodically set code word mark is not synchronized.

7. A forward error correction switching apparatus, applied to a local end, wherein the apparatus comprises:
a receiving module, configured to receive a data code stream transmitted by a peer end;
a detecting module, configured to perform code word mark detection on the data code stream based on a periodically set code word mark to obtain a detection result indicating whether the periodically set code word mark is synchronized, wherein the periodically set code word mark being synchronized indicates a peer end of the local end has enabled a same FEC mode as the local end, the detecting module is configured to:
determine a currently-to-be-matched code block from the data code stream, and detecte whether the currently-to-be-matched code block matches the periodically set code word mark; and
determine, when the currently-to-be-matched code block matches the periodically set code word mark, a next-to-be-matched code block from the data code stream based on a transmission speed of the data code stream and a transmission frequency of a code word mark of the data code stream, and determine that the periodically set code word mark is synchronized when it is detected that the next-to-be-matched code block matches the periodically set code word mark; and
a switching module, configured to perform switching as to whether to enable forward error correction on the local end depending on the detection result.

8. The apparatus according to claim 7, further comprising:
a processing module, configured to delete the periodically set code word mark from the data code stream having been decoded based on a positional relationship between the periodically set code word mark and the data code stream.

9. A computer storage medium, having instructions stored thereon, wherein the instructions, when executed by a processor, cause the processor to carry out the forward error correction switching method according to any one of claims 1 to 6.

## Patentansprüche

1. Vorwärtsfehlerkorrekturumschaltverfahren, das auf eine Endeinrichtung angewendet wird, wobei das Verfahren umfasst:
Empfangen eines Datencodestroms, der durch ein Peer-Ende übertragen wird;
Durchführen einer Codewortmarkenerkennung auf dem Datencodestrom basierend auf einer periodisch festgelegten Codewortmarke, um ein Erkennungsergebnis zu erhalten, das angibt, ob die periodisch festgelegte Codewortmarke synchronisiert ist, wobei die periodisch festgelegte Codewortmarke, die synchronisiert wird, angibt, dass ein Peer-Ende der Endeinrichtung einen gleichen FEC-Modus wie die Endeinrichtung aktiviert aufweist, umfassend:
Bestimmen eines aktuell zu übereinstimmenden Codeblocks aus dem Datencodestrom und Erkennen, ob der aktuell zu übereinstimmende Codeblock mit der periodisch festgelegten Codewortmarke übereinstimmt; und
Bestimmen, wenn der aktuell zu übereinstimmende Codeblock mit der periodisch festgelegten Codewortmarke übereinstimmt, eines nächsten zu übereinstimmenden Codeblocks aus dem Datencodestrom basierend auf einer Übertragungsgeschwindigkeit des Datencodestroms und einer Übertragungsfrequenz einer Codewortmarke des Datencodestroms, und Bestimmen, dass die periodisch festgelegte Codewortmarke synchronisiert ist, wenn erkannt wird, dass der nächste zu übereinstimmende Codeblock mit der periodisch festgelegten Codewortmarke übereinstimmt; und
Durchführen eines Umschaltens, ob die Vorwärtsfehlerkorrektur auf der Endeinrichtung abhängig von dem Erkennungsergebnis aktiviert werden soll.

2. Verfahren nach Anspruch 1, wobei das Bestimmen eines aktuell zu übereinstimmenden Codeblocks aus dem Datencodestrom und das Erkennen, ob der aktuell zu übereinstimmende Codeblock mit der periodisch festgelegten Codewortmarke übereinstimmt, umfasst:
Auswählen, aus einem aktuellen Datenpaket des Datencodestroms, aufeinanderfolgender Bits einer festgelegten Schwellengröße als den aktuell zu übereinstimmenden Codeblock durch Nehmen eines aktuellen Bits als einen Ausgangspunkt;
Erkennen, ob der aktuell zu übereinstimmende Codeblock mit der periodisch festgelegten Codewortmarke übereinstimmt; und
Auswählen, wenn bestimmt wird, dass der aktuell zu übereinstimmende Codeblock nicht mit der periodisch festgelegten Codewortmarke übereinstimmt, aufeinanderfolgender Bits der festgelegten Schwellengröße als ein aktualisierter aktuell zu übereinstimmender Codeblock, durch Nehmen eines nächsten Bits, das dem aktuellen Bit folgt, als einen Ausgangspunkt, und Zurückkehren zu dem Erkennen, ob der aktuell zu übereinstimmende Codeblock mit der periodisch festgelegten Codewortmarke übereinstimmt.

3. Verfahren nach Anspruch 2, wobei das Bestimmen eines nächsten zu übereinstimmenden Codeblocks aus dem Datencodestrom basierend auf einer Übertragungsgeschwindigkeit des Datencodestroms und einer Übertragungsfrequenz einer Codewortmarke des Datencodestroms umfasst:
Bestimmen eines Zieldatenpakets aus dem Datencodestrom basierend auf der Übertragungsgeschwindigkeit des Datencodestroms und der Übertragungsfrequenz der Codewortmarke des Datencodestroms; und
Auswählen, basierend auf einer Positionsbeziehung zwischen dem aktuell zu übereinstimmenden Codeblock und dem aktuellen Datenpaket, aufeinanderfolgender Bits, die eine gleiche Positionsbeziehung aus dem Zieldatenpaket wie der nächste zu übereinstimmende Codeblock aufweisen.

4. Verfahren nach Anspruch 2, ferner umfassend:
Bestimmen, wenn der nächste zu übereinstimmende Codeblock nicht mit der periodisch festgelegten Codewortmarke übereinstimmt, dass die periodisch festgelegte Codewortmarke nicht synchronisiert ist, und Auswählen, aus dem Zieldatenpaket, aufeinanderfolgender Bits der festgelegten Schwellengröße als den aktualisierten aktuell zu übereinstimmenden Codeblock durch Nehmen eines nächsten Bits, das auf ein letztes Bit des nächsten zu übereinstimmenden Codeblocks folgt, als einen Ausgangspunkt, und Zurückkehren zu dem Erkennen, ob der aktuell zu übereinstimmende Codeblock mit der periodisch festgelegten Codewortmarke übereinstimmt.

5. Verfahren nach Anspruch 1, wobei, nach dem Bestimmen, dass die periodisch festgelegte Codewortmarke synchronisiert ist, das Verfahren ferner umfasst:
Löschen der periodisch festgelegten Codewortmarke aus dem Datencodestrom, der basierend auf einer Positionsbeziehung zwischen der periodisch festgelegten Codewortmarke und dem Datencodestrom decodiert wurde.

6. Verfahren nach Anspruch 1, wobei das Durchführen des Umschaltens, ob die Vorwärtsfehlerkorrektur auf der Endeinrichtung abhängig von dem Erkennungsergebnis aktiviert werden soll, umfasst:
Steuern der Endeinrichtung, um eine Vorwärtsfehlerkorrektur zu aktivieren, wenn bestimmt wird, dass die periodisch festgelegte Codewortmarke synchronisiert ist, und
Steuern der Endeinrichtung, um die Vorwärtsfehlerkorrektur nicht zu aktivieren, wenn bestimmt wird, dass die periodisch festgelegte Codewortmarke nicht synchronisiert ist.

7. Vorwärtsfehlerkorrekturumschaltvorrichtung, die an einer Endeinrichtung angewendet wird, wobei die Vorrichtung umfasst:
ein Empfangsmodul, das konfiguriert ist, um einen Datencodestrom zu empfangen, der durch ein Peer-Ende übertragen wird;
ein Erkennungsmodul, das konfiguriert ist, um eine Codewortmarkenerkennung auf dem Datencodestrom basierend auf einer periodisch festgelegten Codewortmarke durchzuführen, um ein Erkennungsergebnis zu erhalten, das angibt, ob die periodisch festgelegte Codewortmarke synchronisiert ist, wobei die periodisch festgelegte Codewortmarke, die synchronisiert wird, anzeigt, dass ein Peer-Ende der Endeinrichtung einen gleichen FEC-Modus wie die Endeinrichtung aktiviert aufweist, wobei das Erkennungsmodul konfiguriert ist zum:
Bestimmen eines aktuell zu übereinstimmenden Codeblocks aus dem Datencodestrom und Erkennen, ob der aktuell zu übereinstimmende Codeblock mit der periodisch festgelegten Codewortmarke übereinstimmt; und
Bestimmen, wenn der aktuell zu übereinstimmende Codeblock mit der periodisch festgelegten Codewortmarke übereinstimmt, eines nächsten zu übereinstimmenden Codeblocks aus dem Datencodestrom basierend auf einer Übertragungsgeschwindigkeit des Datencodestroms und einer Übertragungsfrequenz einer Codewortmarke des Datencodestroms, und Bestimmen, dass die periodisch festgelegte Codewortmarke synchronisiert ist, wenn erkannt wird, dass der nächstes zu übereinstimmende Codeblock mit der periodisch festgelegten Codewortmarke übereinstimmt; und
ein Schaltmodul, das konfiguriert ist, um das Umschalten durchzuführen, ob die Vorwärtsfehlerkorrektur abhängig von dem Erkennungsergebnis auf der Endeinrichtung aktiviert werden soll.

8. Vorrichtung nach Anspruch 7, ferner umfassend:
ein Verarbeitungsmodul, das konfiguriert ist, um die periodisch festgelegte Codewortmarke aus dem Datencodestrom zu löschen, der basierend auf einer Positionsbeziehung zwischen der periodisch festgelegten Codewortmarke und dem Datencodestrom decodiert wurde.

9. Computerspeichermedium, das Anweisungen darauf gespeichert aufweist,
wobei die Anweisungen, wenn sie durch einen Prozessor ausgeführt werden, den Prozessor veranlassen, das Vorwärtsfehlerkorrekturumschaltverfahren nach einem der Ansprüche 1 bis 6 vorzunehmen.

## Revendications

1. Procédé de commutation à correction d'erreur directe, appliquée à une extrémité locale, dans lequel le procédé comprend :
la réception d'un flux de codes de données transmis par une extrémité homologue ;
le fait d'effectuer une détection de marque de mot de code sur le flux de code de données sur la base d'une marque de mot de code définie périodiquement pour obtenir un résultat de détection indiquant le fait de savoir si la marque de mot de code définie périodiquement est synchronisée, dans lequel la marque de mot de code définie périodiquement est synchronisée indique qu'une extrémité homologue de l'extrémité locale a activé un même mode FEC que l'extrémité locale, comprenant :
la détermination d'un bloc de code en cours de mise en correspondance à partir du flux de code de données, et la détection du fait de savoir si le bloc de code en cours de correspondance correspond à la marque de mot de code définie périodiquement ; et
la détermination, lorsque le bloc de code en cours de mise en correspondance correspond à la marque de mot de code définie périodiquement, d'un bloc de code suivant à mettre en correspondance à partir du flux de code de données sur la base d'une vitesse de transmission du flux de code de données et d'une fréquence de transmission d'une marque de mot de code du flux de code de données, et la détermination que la marque de mot de code définie périodiquement est synchronisée, lorsqu'il est détecté que le bloc de code suivant à mettre en correspondance correspond à la marque de mot de code définie périodiquement ; et
le fait d'effectuer une commutation pour activer ou non la correction d'erreurs vers l'avant à l'extrémité locale en fonction du résultat de la détection.

2. Procédé selon la revendication 1, dans lequel la détermination d'un bloc de code en cours de mise en correspondance à partir du flux de code de données, et la détection de la correspondance du bloc de code en cours de mise en correspondance avec la marque de mot de code définie périodiquement, comprennent :
la sélection, dans un paquet de données actuel du flux de code de données, des bits consécutifs d'une taille seuil définie en tant que bloc de code en cours de mise en correspondance en prenant un bit actuel comme point de départ ;
la détection du fait de savoir si le bloc de code en cours de mise en correspondance correspond à la marque de mot de code définie périodiquement ; et
la sélection, lorsqu'il est déterminé que le bloc de code en cours de mise en correspondance ne correspond pas à la marque de mot de code définie périodiquement, des bits consécutifs de la taille seuil définie en tant que bloc de code en cours de mise en correspondance mis à jour en prenant un bit suivant le bit actuel comme point de départ, et le retour à la détection du fait de savoir si le bloc de code en cours de mise en correspondance correspond à la marque de mot de code définie périodiquement.

3. Procédé selon la revendication 2, dans lequel la détermination d'un bloc de code suivant à mettre en correspondance à partir du flux de données en fonction d'une vitesse de transmission du flux de données et d'une fréquence de transmission d'une marque de mot de code du flux de données, comprend :
la détermination d'un paquet de données cible à partir du flux de code de données en fonction de la vitesse de transmission du flux de code de données et de la fréquence de transmission de la marque de mot de code du flux de code de données ; et
la sélection, sur la base d'une relation de position entre le bloc de code en cours de mise encorrespondance et le paquet de données en cours, des bits consécutifs ayant une même relation de position à partir du paquet de données cible que le bloc de code suivant à mettre en correspondance.

4. Procédé selon la revendication 2, comprenant en outre :
la détermination, lorsque le bloc de code suivant à mettre en correspondance ne correspond pas à la marque de mot de code définie périodiquement, que la marque de mot de code définie périodiquement n'est pas synchronisée, et la sélection, dans le paquet de données cible, des bits consécutifs de la taille seuil définie comme bloc de code en cours de mise en correspondance mis à jour en prenant comme point de départ un bit suivant le dernier bit du bloc de code suivant à mettre en correspondance, et le retour à la détection de la correspondance du bloc de code en cours de mise en correspondance avec la marque de mot de code définie périodiquement.

5. Procédé selon la revendication 1, dans lequel, après avoir déterminé que la marque de mot de code définie périodiquement est synchronisée, le procédé comprend en outre :
la suppression de la marque de mot de code définie périodiquement du flux de code de données ayant été décodé sur la base d'une relation de position entre la marque de mot de code définie périodiquement et le flux de code de données.

6. Procédé selon la revendication 1, dans lequel la commutation de l'activation de la correction d'erreur vers l'avant à l'extrémité locale en fonction du résultat de la détection, comprend :
la commande de l'extrémité locale pour activer la correction d'erreur vers l'avant, lorsqu'il est déterminé que la marque de mot de code définie périodiquement est synchronisée, et
la commande de l'extrémité locale pour qu'elle n'active pas la correction d'erreur directe, lorsqu'il est déterminé que la marque de mot de code définie périodiquement n'est pas synchronisée.

7. Appareil de commutation à correction d'erreur directe, appliqué à une extrémité locale, dans lequel l'appareil comprend :
un module de réception, configuré pour recevoir un flux de codes de données transmis par une extrémité homologue ;
un module de détection, configuré pour effectuer une détection de marque de mot de code sur le flux de code de données sur la base d'une marque de mot de code définie périodiquement pour obtenir un résultat de détection indiquant le fait de savoir si la marque de mot de code définie périodiquement est synchronisée, dans lequel la marque de mot de code définie périodiquement étant synchronisée indique qu'une extrémité homologue de l'extrémité locale a activé un même mode FEC que l'extrémité locale, le module de détection est configuré pour :
la détermination d'un bloc de code en cours de mise en correspondance à partir du flux de code de données, et la détection du fait de savoir si le bloc de code en cours de mise en correspondance correspond à la marque de mot de code définie périodiquement ; et
la détermination, lorsque le bloc de code en cours de mise en correspondance correspond à la marque de mot de code définie périodiquement, d'un bloc de code suivant à mettre en correspondance du flux de code de données en fonction d'une vitesse de transmission du flux de code de données et d'une fréquence de transmission d'une marque de mot de code du flux de code de données, et la détermination que la marque de mot de code définie périodiquement est synchronisée, lorsqu'il est détecté que le bloc de code suivant à mettre en correspondance correspond à la marque de mot de code définie périodiquement ; et
un module de commutation, configuré pour effectuer une commutation afin d'activer ou non la correction d'erreurs vers l'avant à l'extrémité locale en fonction du résultat de la détection.

8. Appareil selon la revendication 7, comprenant en outre :
un module de traitement, configuré pour supprimer la marque de mot de code définie périodiquement du flux de code de données ayant été décodé sur la base d'une relation de position entre la marque de mot de code définie périodiquement et le flux de code de données.

9. Support de stockage informatique sur lequel sont stockées des instructions,
dans lequel les instructions, lorsqu'elles sont exécutées par un processeur, amènent ce dernier à réaliser le procédé de commutation par correction d'erreur directe selon l'une des revendications 1 à 6.
